# EUROPEAN PATENT SPECIFICATION

(11) **EP 3 745 694 B1**
(45) Date of publication and mention of the grant of the patent: **06.09.2023**
(21) Application number: 19177277.1
(22) Date of filing: 29.05.2019
(51) Int. Cl.: H04M 3/42

(54) **METHOD AND TELECOMMUNICATION SYSTEM FOR ESTABLISHING A CALL VIA AT LEAST ONE TELECOMMUNICATION NETWORK USING MULTIPLE CALL NUMBERS**
VERFAHREN UND TELEKOMMUNIKATIONSSYSTEM ZUM AUFBAU EINES ANRUFS ÜBER MINDESTENS EIN TELEKOMMUNIKATIONSNETZ MIT MEHREREN RUFNUMMERN
PROCÉDÉ ET SYSTÈME DE TÉLÉCOMMUNICATION PERMETTANT D'ÉTABLIR UN APPEL PAR L'INTERMÉDIAIRE D'AU MOINS UN RÉSEAU DE TÉLÉCOMMUNICATIONS À L'AIDE DE PLUSIEURS NUMÉROS D'APPEL

(43) Date of publication of application: 02.12.2020
(73) Proprietor: Deutsche Telekom AG, 53113 Bonn (DE)
(72) Inventor: Sivchenko, Dmitry, 64331 Weiterstadt (DE); Bayer, Nico, 61231 Bad Nauheim (DE)
(74) Representative: Blumbach · Zinngrebe Patentanwälte PartG mbB

(56) References cited:
- KR-B1- 100 634 282
- US-A1- 2006 177 029
- US-A1- 2019 037 070

## Description

### Field of the invention

The invention relates to a method and a telecommunications system for establishing a telephone call via at least one telecommunications network using multiple call numbers.

### Background of the invention

Telephone services are implemented in telecommunications systems enabling for customers the usage of multiple telephone call numbers on a single telephone device. Such an illustrative system is described in US 2010/0128857 A1, in which telephone calls can be forwarded to virtual call numbers associated with a user cellular telephone. Therefore, a forwarding application is implemented in a system server, wherein the forwarding application includes information with respect to virtual phone numbers associated with a user'2 cellular telephone. The forwarding application assigns user preferences to each of the virtual telephone numbers based upon at least one of a location of the user's cellular telephone and a time of day. The user's cellular telephone is a multi-number cellphone (MNC) having a special software loaded thereon that enables the functionality of the known system. In particular, the cellular telephone can associate a virtual phone number with the phone number of a called party so that the virtual phone number can be displayed on the called party telephone instead of the real phone number.

US 2019/0037070 A1 discloses a method for setting up a call from a calling subscriber to a called subscriber using a mobile phone network that provides protection for the personal dial number of the called subscriber by publishing only a virtual dial number associated with the called subscriber. Furthermore, the method comprises a subsequent calling back of the calling subscriber that provides protection for the personal dial number of the calling subscriber.

US 2006/0177029 A1 discloses a method for providing virtual multi-line (VML) telephone service which includes associating first and second telephone numbers with a telephone, such that the first telephone number is subject to a first billing scheme and the second telephone number is subject to a second billing scheme. Therefore, VML subscribers are able to place and/or receive telephone calls using two different telephone numbers on a single handset.

### Summary of the invention

It is an object of the present invention to provide a method and a telecommunications system, which enable to establish a call via at least one telecommunications network using multiple call numbers on different phones and independent of access technology.

According to a further aspect of the present invention, a method and telecommunications system for establishing a call via at least one telecommunications network using multiple call numbers are provided which allow in an easy way to scale up a telecommunications system by adding further subscriber terminals and virtual call numbers without installing additional application software on the subscriber terminals.

The above-mentioned technical problem is solved by the independent method claims 1 and 2 as well as by the independent system claim 3.

### Brief description of the drawings

The invention is described in detail below with respect to the accompanying drawings, of which:
Fig. 1 shows an illustrative embodiment of a telecommunications system 10 comprising an interconnected service platform according to the invention, and

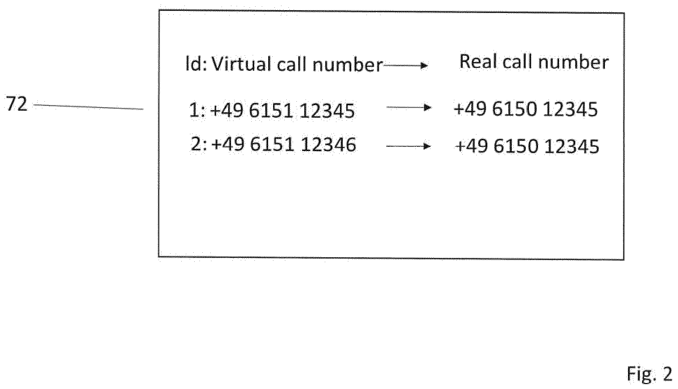

Fig. 2 shows a storage as depicted in fig. 1. storing virtual call numbers and real call numbers associated therewith in a predefined manner.

### Detailed description

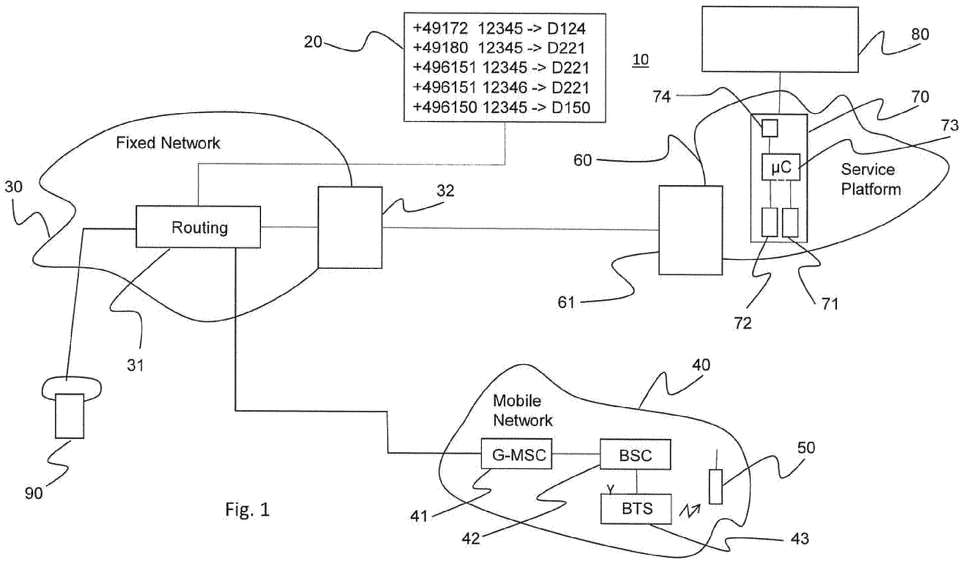

Fig. 1 depicts an illustrative telecommunications system 10 which comprises for example at least one telecommunications network. By way of example a fixed telecommunications network 30 and a mobile network 40 can be interconnected as shown in fig. 1. The fixed telecommunications network 30 can be implemented as a PSTN (Public Switched Telephone Network) using the signaling system number 7 or a Next Generation Network (NGN) using the session initiation protocol (SIP) as a network protocol for establishing, controlling and releasing a communication session between telephony devices. Regarding the illustrative telecommunications system 10 the fixed network 30 is a NGN using a plurality of connected routers to route telephony calls through the network 30 in a well-known manner. Routing block 31 symbolizes the plurality of routers. For the sake of simplicity only one subscriber terminal 90 is connected to the telecommunications network 30, although a plurality of subscriber terminals are generally connected to the telecommunications network 30. The illustrative subscriber terminal 90 can be a landline end device.

The mobile network 40 may be realized for example by GSM, LTE or any other known mobile network or a mobile network still to be developed. The illustrative GSM network 40 is schematically shown to comprise gateway mobile switching center 41 to interconnect the mobile network 40 to NGN 30, a base station controller 42, a base transceiver station 43 and a mobile phone 50 which currently moves in a cell covered by the base transceiver station 43.

Furthermore, the illustrative telecommunications system 10 may comprise a service platform 60 and a database 20, in particular a number portability database, which is connected to the telecommunications network 30. In the illustrative telecommunications system 10 the NGN 30 functions as a transit network, i.e. telephony calls from all other telecommunications operators, e.g. the operator of the mobile network 40, are firstly routed to the NGN 30 and afterwards to the service platform 60 by an interconnecting system as will be described below. The interconnecting system may comprise a first interconnecting device 32 which belongs to the NGN 30 and a second interconnecting device 61 which is associated with the service platform 60. Both, interconnecting device 32 and interconnecting device 61 can be implemented as a session border controller SBC which is known.

By way of example, the telecommunications network 30 may belong to the telephony operator Deutsche Telekom AG using a porting code D150, while mobile network 40 may belong to Mobile Telekom using the porting code D124. Therefore, all fixed telephone call numbers which belong to the operator of the telecommunications network 30 are assigned to the porting code D150 while all cellphone call numbers which belong to the operator of the mobile network 40 are assigned to the porting code D124. A list of all fixed telephone call numbers belonging to the operator of the telecommunications network 30 and all cellphone call numbers belonging to the operator of the mobile network 40 are stored in the database 20 together with their respective porting code. The fixed telephone call numbers and the cellphone call numbers are herein also called real call numbers to indicate that each of these call numbers is assigned to a respective customer by a contract with the respective telephony operator. For example, a cellphone call number might be a MSISDN stored on a SIM card of a cellphone, e.g. on the SIM card of the cellphone 50.

By way of example, it is assumed that a real call number +49615012345 has been assigned to the subscriber of terminal 90, while a real call number +4917212345 has been assigned to the subscriber of the mobile phone 50. As a result, the real call number +49615012345 is stored in the database 20 together with an information that it is linked to the porting code D150, while the real call number +49617212345 is stored in the database 20 together with an information that it is linked to the porting code D124.

The illustrative telecommunications system 10 provides telephony services enabling subscribers of the NGN 30 and/or subscribers of the mobile network 40 to use multiple telephony call numbers including the real telephone call number and at least one virtual call assigned to the respective subscriber, preferably without modifying the subscriber terminals. Therefore, the virtual call numbers associated to the subscribers are managed and processed centrally in the service platform 60 which is operated as a single operator having its own unique porting code, e.g. D221.

The service platform 60 may include at least a hardware server 70 which for example may comprise a control unit 73, a program storage 71 for storing instructions for monitoring and controlling the function of the server 70, and a storage 72 for storing, for example virtual call numbers, real call numbers of a plurality of subscribers and for example subscriber dependent preferences or rules as to how virtual call numbers and real numbers should be handled. For example, it is now assumed that two virtual call numbers +49615112345 and +49615112346 have been assigned to the subscriber owning the real call number +40615012345 and using the landline terminal 90. Therefore, the virtual call numbers and an information indicating that these virtual call numbers are assigned to the real call number +496150 12345 are stored in storage 72.

Furthermore, the server 70 may comprise a configuration interface which is adapted to interact with a user configuration entity 80 enabling the user of the terminal 90 to configure the server 70. In particular, the configuration entity 80 may be an Internet-based interface, in particular a web interface on a user device such as a PC.

In order to enable subscribers to use the virtual call numbers stored in the storage 72 the porting code D221, the virtual call numbers and an information indicating that these virtual call numbers are linked to the porting code D221 are stored in the database 20. Some of the data stored in the database 20 are shown in Fig. 1.

In addition, at least one specific service number, e.g. +4918012345 can be stored in the database 20, which is also linked to the porting code D221 of the service platform 60. The service number +4918012345 may be used by a calling party to cause the service platform 60 to hide the real call number of the calling party for a called party.

It should be noted, that no modification is necessary with respect to the subscriber terminals 90 and 40. In particular, no additional software or application has to be stored on the subscriber terminals 90 and 50. As a result, the telecommunications system 10 as shown in fig. 1 can be easily and cost-effectively scaled up by storing additional virtual call numbers and/or real call numbers and respective linking information on the service platform 60, in particular on the storage 72, and in the database 20. As already mentioned above, new virtual call numbers and new real call numbers can be configured on the service platform 60 by a user using its configuration entity 18 which may be connected via the Internet to configuration interface 74 of the server 70. Therefore, multiple virtual call numbers might be assigned to a single real number of the customer as well as a single virtual call number might be assigned to a number of real call numbers of a customer.

The illustrative telecommunications system 10 is now described in detail with respect to an incoming call wherein the incoming call is initiated at the mobile phone 50 and received by subscriber terminal 90.

It is assumed that the user of subscriber terminal 90 owns its real call number +49615012345 and the virtual call numbers +49615112345 and +49615112346 as already described above.

At first, the virtual call number +49615112345 associated to the subscriber terminal 90 can be provided by the mobile phone 50 to establish a call to terminal 90. For example the virtual call number +49615112345 can be provided by entering or dialing the respective digits on the mobile phone 30. Next, it is determined whether the dialed virtual call number is assigned to porting code D221 of the service platform 60. For example, this can be performed by transmitting a signaling information including the dialed virtual call number via the G-HSC 41 of the mobile network 40 and the telecommunications network 30 to the database 20. The database 20 may determine in response to the virtual call numbers and the porting code D221 stored in the database 20 that the dialed virtual call number is assigned to the porting code D221 of the service platform 60. As a result, a signaling message including the dialed virtual call +49615112345 number can be routed, in a known manner, via the NGN network 30 using the porting code D221 through SBC 32 and SBC 61 to the server 70 of the service platform 60. At a next step, the service platform 60, in particular the server 70 is adapted to analyze the received signaling message to determine the real call number which the dialed virtual call number is linked to. The server 70 is further adapted to transmit a signaling message including the determined real call number +49615012345 via the SBC devices 61 and 32 to the telecommunications network 30 which is adapted to route the signaling message including the real call number determined by the server 60 to the called telephone subscriber, e. g. to subscriber terminal 90, thereby establishing a call between the mobile phone 50 initiating the call and terminal 90 which the real call number belongs to.

It should be understood that the incoming call processing procedure as described above can be performed in a similar way between subscriber terminals which are both connected to the telecommunications network 30 or to the mobile network 40.

By way of example, processing of an outgoing call is now illustrated in detail, wherein the real call number of the calling party is not revealed to the called party, but a virtual call number may be displayed on the terminal of the called party. However, the virtual call number to be used is not stored on the terminal of the calling party. It is assumed for example, that at least service number +49180 12345 and its link to porting code D221, the real call number +49615012345 associated to the subscriber of terminal 90 and its link to porting code D150 and the real call number +4917212345 associated to the subscriber of the mobile phone 30 terminal 90 and its link to porting code D124 are stored on the database 20, while virtual call numbers +49615112345 and +4961512346 and its link to the real call number 615012345 and the service number can be stored in storage 72 of the service platform 60 and processed by the server 70. It is to be noted, that routing the service number through the NGN 30 and the mobile network 40 works in the same way as routing fixed call numbers or mobile call numbers.

Now, an outgoing call shall be initiated, for example by terminal 90 and received by the mobile phone 50.

The challenge is to get the call outgoing from terminal 90 firstly to the service platform 60, but not directly to the original destination, i.e. the mobile phone 50.

At first, the specific service number, e.g. 4918012345 can be dialed on the terminal 90 which is then routed to the server 70. This can be achieved by routing a signal message including the service number and the real call number +49616512345 associated to the terminal 90 to the database 20 to check whether the service number is known and associated to the porting code D221. If so, the signal message is routed via the NGN 30 and transmitted to the server 70. In response to the service number and the real call number +49615012345 included in the received signal message the server 70 and in particular the microcontroller 73 send a request message to terminal 90 inviting the user of terminal 90 to enter or dial an information indicating which virtual call number associated to the real call number +49615012345 should be used by the server. This step is necessary, if more than one virtual call number are assigned to the real call number associated with the calling party, e.g. the user of terminal 90. For example, the user enters the digit "2" to indicate that the second virtual call number +49615012346 is to be used. Terminal 90 can be adapted to send, thereafter, a further signal message including the information "2" and the real call number of terminal 90 to the server 70. In response to the information "2" included in the received signal message the server 70 and in particular the microcontroller 73 send a request message to terminal 90 inviting the user of terminal 90 to enter or dial the real call number of the desired called party, e.g. the mobile phone number +4917212345. The terminal 90 may be adapted to send a further signal message including the real call number of the called party via the NGN 30 to the server 70. The server 70 is adapted to provide, in response to the information received from terminal 90 a signal message including the second virtual call number associated with the subscriber of terminal 90 to the NGN 30 which is adapted to route and forward the signal message including the second virtual call number via the mobile network 40 to the mobile phone 50 using the real call number +4917212345 of the called party, thereby establishing a call from terminal 90 to mobile phone 50. As a result, only the second virtual call number can be display on the mobile phone 50 and the real call number of the calling party stays hidden. It should be noted, that the sequence of sending the real call number of a called party and the information indicating the virtual call number to be used from terminal 90 to server 70 is not of relevance for a proper function. According to an alternative implementation, terminal 90 can be adapted to send the service number, the information indicating the virtual call number to be used and the real call number of the called party in a single message using the database 20 to determine that the single message is to be routed to the server 70 of service platform 60. In this case, the server 70 is adapted to analyze the single message to send a signal message including the selected virtual call number via the NGN 30 and the mobile network 30 to the called party, e.g. mobile phone 50.

By using the method and telecommunications system as described above a telephone subscriber, e.g. the user of terminal 90, may initiate and receive any calls by using virtual call numbers in a flexible way while not publishing its real call number to anyone, e.g. the user of mobile phone 50. The subscriber may get any additional virtual call numbers it wants to use on the fly in a dynamic way by using its configuration entity 80 which may be connected via Internet to the configuration interface 74 of server 70 of the service platform 60 or by using any other known signaling methods like calls or SMS.

In this way each subscriber using the service platform 60 can configure any specific rules on the service platform 60, like black and white listings defining the conditions to use or not to use certain virtual call numbers. For example rules may define predefined period of times during which specific virtual call numbers are activated or deactivated.

Further illustrative embodiments and aspects of the invention are set forth below in connection with the figures.

A method for establishing a call via at least one telecommunications network 30, 40 is provided using a service platform 60 interconnected to the at least one telecommunications network 30, 40, wherein a real call number and at least one virtual call number are allocated to each of a plurality of telephone subscribers, comprising the steps of:
a) storing, on the service platform 60, for each telephone subscriber of the plurality of telephone subscribers the at least one virtual call number and an information linking the at least one virtual number to the real number of the respective telephone subscriber;
b) assigning to all virtual call numbers stored on the service platform 60 a porting code which identifies the service platform 60;
c) entering, on a terminal, e.g. terminal 90 of a calling telephone subscriber, a virtual call number in order to setup a call to a called telephone subscriber, e.g. the user of a terminal 50;
d) determining whether the porting code is assigned to the virtual call number entered at step c);
e) if so, routing the virtual call number provided at step
c) via the at least one telecommunications network 30, 40 to the service platform 60 by using the porting code;
f) determining, at the service platform 60, the real call number which the virtual call number entered at step c) is linked to; and
g) routing the real call number determined at step f) to the called telephone subscriber to whom the real call number determined at step f) belongs to so that a call is established between the calling telephone subscriber, e.g. the user of terminal 90 and the called telephone subscriber, e.g. the user of mobile phone 50.

According to a preferred embodiment, the porting code and the virtual call numbers assigned to the porting code at step by are stored in a database 20 which is connected to the at least one telecommunications network 30, 40, and wherein step d) comprises the step of accessing the database (20) and determining whether the porting code is assigned to the virtual call number provided at step c).

According to a further preferably aspect, a method for establishing a call over at least one telecommunications network 30, 40 is provided using a service platform 60 interconnected to the at least one telecommunications network 30, 40, wherein a real call number and at least one virtual call. number are allocated to each of a plurality of telephone subscribers, comprising the steps of:
a) storing, on the service platform 60, for each telephone subscriber of the plurality of telephone subscribers at least one virtual call number and an information linking the at least one virtual number to the real number of the respective telephone subscriber;
b) assigning to a service number which is allocated to the service platform 60 a porting code which identifies the service platform 60;
c) providing, in a terminal, e.g. terminal 90, of a calling telephone subscriber for whom at least one virtual call number and an information linking the at least one virtual number to the real call number of said calling telephone subscriber is stored at the service platform 60, the service number of the service platform 60, a real call number of a called telephone subscriber, and an information on the virtual call number to be used for displaying on a terminal of the called telephone subscriber, wherein the virtual call number is linked to the real call number of said calling telephone subscriber, and;
d) determining whether the service number provided at step
c) is assigned to the porting code,
e) if so, routing the service number of the service platform 60, the information on the virtual call number to be used for displaying on a terminal of the called telephone subscriber, e.g. terminal 50, and the real call number of the called telephone subscriber provided at step
c) from the terminal of said calling telephone subscriber, e.g. terminal 90, via the at least one telecommunications network 30, 40 to the service platform 60 by using the porting code assigned to the service number;
f) determining, at the service platform 60, the virtual call number to be used for displaying on the terminal 50 of the called telephone subscriber in response to the service number and the information on the virtual call number to be used; and
g) routing, in response to the real call number of the called telephone subscriber, the virtual call number determined at step f) to the called telephone subscriber and establishing a call between the calling telephone subscriber and the called telephone subscriber using the real call number of the called telephone subscriber; and
h) displaying the virtual call number of the calling telephone subscriber on the terminal of said called telephone subscriber, e.g. on terminal 50.

It is to be noted, that the service platform 60 may be comprise at least one server 70, which in turn may comprise a controller 73, at least one storage 72 and a configuration interface 74.

In a preferred embodiment, the porting code and the service number assigned to the porting code at step b) can be stored in a database 20 which is connected to the at least one telecommunications network 30, 40, and wherein step d) comprises the step of accessing the database and determining whether the porting code is assigned to the service number provided at step c).

In a preferred embodiment, step e) may comprise the steps of:
routing the service number via the at least one telecommunications network 30, 40 to the service platform (60, 70) by using the porting code assigned to the service number of the service platform 60, and thereafter requesting the calling telephone subscriber to enter the information on the virtual call number to be used and to enter the real call number of the called telephone subscriber provided at step c) on the terminal 90, wherein step c) may comprise the steps of entering, by the calling telephone subscriber the service number of the service platform 60, the information of the virtual call number to be used and the real call number of the called telephone subscriber on the terminal (90) of the calling telephone subscriber.

According to a further preferred aspect a telecommunications system 10 may comprise
at least one telecommunications network 30, 40,
a plurality of terminals, e.g. terminals (50 and 90, each configured to process a distinct real call number,
a service platform 60 interconnected to the at least one telecommunications network 30, 40 via an interconnecting system comprising for example session border controllers 32 and 61, wherein the service platform 60 is configured to store for each telephone subscriber of a plurality of telephone subscriber at least one virtual call number and an information linking the at least one virtual call number to a real call number of the respective telephone subscriber,
a database 20 configured to store a plurality of virtual call numbers and a porting code which is assigned to each virtual number and identifies the service platform 60, 70, wherein the database 20 is further configured to provide the porting code to the at least one telecommunications network 30, 40, wherein
the at least one telecommunications 30, 40 is configured to get access to the database 20, wherein the at least one telecommunications network 30, 40 is configured to route signaling information including a virtual call number provided by a terminal of a calling telephone subscriber, e.g. terminal 90, to the database 20 and to route signaling information to the service platform 60 via the interconnecting system 32, 61 by using the porting code which is assigned to the virtual call number, wherein
the service platform 60 is configured to determine the real call number which is linked to the virtual call number included in the signaling information and to provide the determined real call number to the at least one telecommunications network 30, 40, wherein.
the at least one telecommunications network 30, 40 is configured to route, in response to the real call number determined by the service platform 60, a signaling information to the called telephone subscriber so that a call is established between the calling telephone subscriber and the called telephone subscriber.

In a preferred embodiment, a service number and an information that the service number is allocated to the porting code can be stored in the database 20, wherein the at least one telecommunications network 30, 40 is configured to route signaling information, e.g. a call setup message, including the service number provided for example by the terminal 90 of the calling telephone subscriber to the database 20 and to route signaling information including the service number to the service platform 60 via the interconnecting system 32, 61 by using the porting code which is assigned to the service number, wherein the service platform 60 can be configured to request from the calling telephone subscriber, a real call number of a called telephone subscriber and an information on the virtual call number to be used for displaying for example on a terminal 50 of the called telephone number, wherein the virtual call number is linked to the real number of the calling telephone subscriber, wherein
the terminal 90, which is allocated to the calling telephone subscriber, is configured to send the information on the virtual call number to be used for displaying on the terminal 50 of the called telephone subscriber and the real call number of a called telephone subscriber via the at least one telecommunications network 30, 40 to the service platform 60, 70, wherein
the service platform 60 is configured to determine the virtual call number to be used for displaying on the terminal 50 of the called telephone subscriber and to provide the determined virtual call number and the real call number to the at least one telecommunications network 30, 40,
wherein the at least one telecommunications network 30, 40 is configured to route in response to the real call number of the called telephone subscriber the determined virtual call number to be used for displaying on the terminal 50 of the called telephone subscriber to the called telephone subscriber and to establish a call between the calling telephone subscriber and the called telephone subscriber using the real call number of the called telephone subscriber.

Preferably, the service platform 60 is configured as a data-processing system which may comprise at least a server 70 having a controller 73, at least one storage 72 and a configuration interface 74 adapted to communicate with a user's configuration device 80.

### Reference List

- 10: telecommunications system
- 20: number portability database
- 30: telecommunications network, e.g. fixed telephone network using ISDN or NGN
- 31: interconnection and routing system
- 32: interconnecting device, e.g. Session Border Controller (SBC)
- 40: mobile network as a telecommunications network, using e.g. GSM standard
- 41: gateway mobile switching center (G-MSC), 42 base station controller (BSC)
- 43: base transceiver station (BTS)
- 50: mobile phone as a subscriber terminal
- 60: service platform
- 61: interconnecting device, e.g. SBC
- 70: server
- 71: program storage
- 72: data storage for storing, for example, virtual call numbers and real call numbers
- 73: controller, e.g. microcontroller
- 74: configuration interface
- 80: configuration entity, e.g. a web interface on a user device

## Claims

1. A method for processing an outgoing call using at least one telecommunications network (30, 40) using a service platform (60) interconnected to the at least one telecommunications network (30, 40), wherein a real call number and at least one virtual call number are allocated to each of a plurality of telephone subscribers, wherein for each telephone subscriber of the plurality of telephone subscribers at least one virtual call number and an information linking the at least one virtual number to the real call number of the respective telephone subscriber are stored on the service platform (60, 70, 72),wherein a porting code which identifies the service platform (60, 70) is assigned to a service number which is allocated to the service platform (60, 70), wherein the porting code and the service number assigned to the porting code are stored in a database (20) which is connected to the at least one telecommunications network (30, 40); wherein the method comprises the steps of:
a) entering , on the terminal (90) of the calling telephone subscriber for whom one virtual call number and an information linking the at least one virtual number to the real call number of said calling telephone subscriber are stored at the service platform (60, 70, 72), the service number of the service platform (60, 70),;
b) routing a signal message including the service number and the real call number of the calling telephone subscriber to the database (20) and determining whether the service number entered at step a) is assigned to the porting code,
c) if so, routing the signal message of step b) via the at least one telecommunications network to the service platform (60, 70) by using the porting code assigned to the service number;
d) sending in response to the service number and the real call number of the calling telephone subscriber included in the signal message of step c) a request message to the terminal (90) of the calling telephone subscriber inviting the calling telephone subscriber to enter the real call number of the called telephone subscriber;
e) sending, by the terminal (90) of the calling telephone subscriber, a signal message including the real call number of the called telephone subscriber to the service platform (60, 70);
f) routing, in response to the real call number of the called telephone subscriber, the virtual call number assigned to the calling telephone subscriber to the terminal (30) of the called telephone subscriber and establishing an outgoing call from the terminal (90) of the calling telephone subscriber to the terminal (50) of the called telephone subscriber using the real call number of the called telephone subscriber over the at least one telecommunications network (30, 40); and
g) displaying the virtual call number of the calling telephone subscriber on the terminal (50) of said called telephone subscriber.

2. A method for processing an outgoing call using at least one telecommunications network (30, 40) and a service platform (60) interconnected to the at least one telecommunications network (30, 40), wherein a real call number and at least one virtual call number are allocated to each of a plurality of telephone subscribers, wherein for each telephone subscriber of the plurality of telephone subscribers at least one virtual call number and an information linking the at least one virtual number to the real call number of the respective telephone subscriber are stored on the service platform (60, 70, 72), wherein
a porting code which identifies the service platform (60, 70)is assigned to a service number which is allocated to the service platform (60, 70), wherein the porting code and the service number assigned to the porting code are stored in a database (20) which is connected to the at least one telecommunications network (30, 40);
a) entering, on the terminal (90) of the calling telephone subscriber for whom at least two virtual call numbers and an information linking the at least two virtual numbers to the real call number of said calling telephone subscriber are stored at the service platform (60, 70, 72), the service number of the service platform (60, 70);
b) routing a signal message including the service number and the real call number of the calling telephone subscriber to the database (20) and determining whether the service number entered at step a) is assigned to the porting code,
c) if so, routing the signal message of step b) via the at least one telecommunications network to the service platform (60, 70) by using the porting code assigned to the service number;
d) sending in response to the service number and the real call number of the calling telephone subscriber included in the signal message of step c) a request message to the terminal (90) of the calling telephone subscriber inviting the calling telephone subscriber to enter an information on the virtual call number to be used for displaying on the terminal (50) of the called telephone subscriber, wherein the virtual call number is linked to the real number of said calling telephone subscriber;
e) transmitting, by the terminal (90) of the calling telephone subscriber, a signal message including the real call number of the calling telephone subscriber and the information on the virtual call number to be used for displaying on the terminal (50) of the called telephone subscriber to the service platform (60, 70);
f) sending, in response to the virtual call number included in the signal message of step e) a request message to the terminal (90) of the calling telephone subscriber inviting the calling telephone subscriber to enter the real call number of the called telephone subscriber;
g) sending, by the terminal (90) of the calling telephone subscriber a signal message including the real call number of the called telephone subscriber to the service platform (60, 70);
h) determining, at the service platform (60, 70), the virtual call number to be used for displaying on the terminal (50) of the called telephone subscriber in response to the service number and the information on the virtual call number to be used; and
i) routing, in response to the real call number of the called telephone subscriber, the virtual call number determined at step h) to the terminal (30) of the called telephone subscriber and establishing an outgoing call from the terminal (90) of the calling telephone subscriber to the terminal (50) of the called telephone subscriber using the real call number of the called telephone subscriber over the at least one telecommunications network (30, 40); and
j) displaying the virtual call number of the calling telephone subscriber determined at step h) on the terminal (50) of said called telephone subscriber.

3. A telecommunications system (10) comprising
at least one telecommunications network (30, 40), a plurality of terminals (50, 90), each configured to process a distinct real call number,
a service platform (60, 70) interconnected to the at least one telecommunications network (30, 40) via an interconnecting system (32, 61), wherein the service platform (60, 70, 72) is configured to store for each telephone subscriber of a plurality of telephone subscriber at least one virtual call number and an information linking the at least one virtual call number to a real call number of the respective telephone subscriber,
a database (20) configured to store a plurality of virtual call numbers, a porting code which is assigned to each virtual number and identifies the service platform (60, 70), a service number and an information that the service number is allocated to the porting code, wherein the database (20) is further configured to provide the porting code to the at least one telecommunications network (30, 40), wherein
the at least one telecommunications network(30, 40) is configured to get access to the database (20), wherein
the at least one telecommunications network (30, 40) is configured to route signaling information including the service number provided by the terminal (90) of the calling telephone subscriber to the database (20) and to route signaling information including the service number to the service platform (60, 70) via the interconnecting system (31, 61) by using the porting code which is assigned to the service number, wherein
the service platform (60, 70) is configured to send a request message to the terminal (90) of the calling telephone subscriber inviting the calling telephone subscriber to enter a real call number of a called telephone subscriber and an information on the virtual call number to be used for displaying on the terminal (50) of the called telephone subscriber, wherein the virtual call number is linked to the real number of the calling telephone subscriber, wherein the terminal (90) of the calling telephone subscriber is configured to send the information on the virtual call number to be used for displaying on the terminal (50) of the called telephone subscriber and the real call number of the called telephone subscriber via the at least one telecommunications network (30, 40) to the service platform (60, 70), wherein
the service platform (60, 70) is configured to determine, in response to the information on the virtual call number to be used for displaying on the terminal (50) of the called telephone subscriber the virtual call number to be used for displaying on the terminal (50) of the called telephone subscriber and to provide the determined virtual call number and the real call number of the called telephone subscriber to the at least one telecommunications network (30, 40),
wherein the at least one telecommunications network (30, 40) is configured to route in response to the real call number of the called telephone subscriber the determined virtual call number to be used for displaying on the terminal (50) of the called telephone subscriber to the terminal (50) of the called telephone subscriber and to establish an outgoing call from the terminal (90) of the calling telephone subscriber to the terminal (50) of the called telephone subscriber using the real call number of the called telephone subscriber.

4. The telecommunications system according to claim 3, wherein the service platform (60) comprises at least a server (70) having a controller, at least one storage and a configuration interface (74) adapted to communicate with a user's configuration device (80).

## Patentansprüche

1. Verfahren zum Verarbeiten eines abgehenden Anrufs unter Verwendung mindestens eines Telekommunikationsnetzes (30, 40) und unter Verwendung einer mit dem mindestens einen Telekommunikationsnetz (30, 40) verbundenen Diensteplattform (60), wobei jedem einer Mehrzahl von Fernsprechteilnehmern eine tatsächliche Rufnummer und mindestens eine virtuelle Rufnummer zugeordnet werden, wobei für jeden Fernsprechteilnehmer der Mehrzahl von Fernsprechteilnehmern mindestens eine virtuelle Rufnummer und eine die mindestens eine virtuelle Rufnummer mit der tatsächlichen Rufnummer des jeweiligen Fernsprechteilnehmers verknüpfende Information auf der Diensteplattform (60, 70, 72) gespeichert werden, wobei
ein Portierungscode, der die Diensteplattform (60, 70) identifiziert, einer Dienstenummer zugeordnet ist, die der Diensteplattform (60, 70) zugeordnet ist, wobei der Portierungscode und die dem Portierungscode zugeordnete Dienstenummer in einer Datenbank (20) gespeichert sind, die mit dem mindestens einen Telekommunikationsnetz (30, 40) verbunden ist, wobei das Verfahren die folgenden Schritte umfasst:
a) Eingeben der Dienstnummer der Dienstplattform (60, 70, 72) an dem Endgerät (90) des anrufenden Fernsprechteilnehmers, für den eine virtuelle Rufnummer und eine Information, die die mindestens eine virtuelle Rufnummer mit der tatsächlichen Rufnummer des anrufenden Fernsprechteilnehmers verbindet, gespeichert sind;
b) Weiterleiten einer Signalnachricht, die die Dienstnummer und die tatsächliche Rufnummer des anrufenden Fernsprechteilnehmers enthält, an die Datenbank (20) und Ermitteln, ob die in Schritt a) eingegebene Dienstnummer dem Portierungscode zugeordnet ist,
c) wenn ja, Weiterleiten der Signalnachricht von Schritt b) über das mindestens eine Telekommunikationsnetz an die Dienstplattform (60, 70) unter Verwendung des der Dienstnummer zugeordneten Portierungscodes;
d) Senden, als Reaktion auf die Dienstnummer und die tatsächliche Rufnummer des anrufenden Fernsprechteilnehmers, die in der Signalnachricht von Schritt c) enthalten sind, einer Anforderungsnachricht an das Endgerät (90) des anrufenden Fernsprechteilnehmers, in der der anrufende Fernsprechteilnehmer aufgefordert wird, die tatsächliche Rufnummer des angerufenen Fernsprechteilnehmers einzugeben;
e) Senden einer Signalnachricht, die die tatsächliche Rufnummer des angerufenen Fernsprechteilnehmers enthält, vom Endgerät (90) des anrufenden Fernsprechteilnehmers an die Dienstplattform (60, 70) ;
f) Weiterleiten der dem anrufenden Fernsprechteilnehmer zugewiesenen virtuellen Rufnummer zum Endgerät (30) des gerufenen Fernsprechteilnehmers unter Ansprechen auf die tatsächliche Rufnummer des gerufenen Fernsprechteilnehmers und Herstellen eines abgehenden Anrufs vom Endgerät (90) des anrufenden Fernsprechteilnehmers zum Endgerät (50) des gerufenen Fernsprechteilnehmers unter Verwendung der tatsächlichen Rufnummer des gerufenen Fernsprechteilnehmers über das mindestens eine Telekommunikationsnetz (30, 40); und
g) Anzeigen der virtuellen Rufnummer des anrufenden Fernsprechteilnehmers auf dem Endgerät (50) des gerufenen Fernsprechteilnehmers.

2. Verfahren zur Verarbeitung eines abgehenden Anrufs unter Verwendung mindestens eines Telekommunikationsnetzes (30, 40) und einer mit dem mindestens einen Telekommunikationsnetz (30, 40) verbundenen Diensteplattform (60), wobei jedem einer Mehrzahl von Fernsprechteilnehmern eine tatsächliche Rufnummer und mindestens eine virtuelle Rufnummer zugeordnet werden, wobei für jeden Fernsprechteilnehmer der Mehrzahl von Fernsprechteilnehmern mindestens eine virtuelle Rufnummer und eine die mindestens eine virtuelle Rufnummer mit der tatsächlichen Rufnummer des jeweiligen Fernsprechteilnehmers verknüpfende Information auf der Diensteplattform (60, 70, 72) gespeichert werden, wobei einer der Diensteplattform (60, 70) zugeordneten Dienstenummer ein die Diensteplattform (60, 70) identifizierender Portierungscode zugeordnet wird, wobei der Portierungscode und die dem Portierungscode zugeordnete Dienstenummer in einer Datenbank (20) gespeichert werden, die mit dem mindestens einen Telekommunikationsnetz (30, 40) verbunden ist;
a) Eingeben der Dienstnummer der Dienstplattform (60, 70) an dem Endgerät (90) des anrufenden Fernsprechteilnehmers, für den mindestens zwei virtuelle Rufnummern und eine Information, die die mindestens zwei virtuellen Nummern mit der tatsächlichen Rufnummer des anrufenden Fernsprechteilnehmers verbindet, auf der Dienstplattform (60, 70, 72) gespeichert sind;
b) Weiterleiten einer Signalnachricht, die die Dienstnummer und die tatsächliche Rufnummer des anrufenden Fernsprechteilnehmers enthält, an die Datenbank (20) und Ermitteln, ob die in Schritt a) eingegebene Dienstnummer dem Portierungscode zugeordnet ist,
c) falls ja, Weiterleiten der Signalnachricht von Schritt b) über das mindestens eine Telekommunikationsnetz an die Dienstplattform (60, 70) unter Verwendung des der Dienstnummer zugeordneten Portierungscodes;
d) Senden, als Reaktion auf die Dienstnummer und die tatsächliche Rufnummer des anrufenden Fernsprechteilnehmers, die in der Signalnachricht von Schritt c) enthalten sind, einer Anforderungsnachricht an das Endgerät (90) des anrufenden Fernsprechteilnehmers, in der der anrufende Fernsprechteilnehmer aufgefordert wird, eine Information über die virtuelle Rufnummer einzugeben, die zur Anzeige auf dem Endgerät (50) des angerufenen Fernsprechteilnehmers verwendet werden soll, wobei die virtuelle Rufnummer mit der tatsächlichen Nummer des anrufenden Fernsprechteilnehmers verknüpft ist;
e) Übertragen, durch das Endgerät (90) des anrufenden Fernsprechteilnehmers, einer Signalnachricht, die die tatsächliche Rufnummer des anrufenden Fernsprechteilnehmers und die Information über die virtuelle Rufnummer, die zur Anzeige auf dem Endgerät (50) des angerufenen Fernsprechteilnehmers verwendet werden soll, enthält, an die Dienstplattform (60, 70) ;
f) Senden, als Reaktion auf die in der Signalnachricht von Schritt e) enthaltene virtuelle Rufnummer, einer Anforderungsnachricht an das Endgerät (90) des anrufenden Fernsprechteilnehmers in der der anrufende Fernsprechteilnehmer aufgefordert wird, die tatsächliche Rufnummer des angerufenen Fernsprechteilnehmers einzugeben;
g) Senden einer Signalnachricht, die die tatsächliche Rufnummer des gerufenen Fernsprechteilnehmers enthält, vom Endgerät (90) des anrufenden Fernsprechteilnehmers an die Dienstplattform (60, 70) ;
h) Ermitteln der virtuellen Rufnummer, die zur Anzeige auf dem Endgerät (50) des angerufenen Fernsprechteilnehmers zu verwenden ist, an der Dienstplattform (60, 70) als Reaktion auf die Dienstnummer und die Informationen über die zu verwendende virtuelle Rufnummer; und
i) Weiterleiten, unter Ansprechen auf die tatsächliche Rufnummer des gerufenen Fernsprechteilnehmers, der im Schritt h) ermittelten virtuellen Rufnummer an das Endgerät (30) des gerufenen Fernsprechteilnehmers und Herstellen einer abgehenden Verbindung vom Endgerät (90) des anrufenden Fernsprechteilnehmers zum Endgerät (50) des gerufenen Fernsprechteilnehmers unter Verwendung der tatsächlichen Rufnummer des gerufenen Fernsprechteilnehmers über das mindestens eine Telekommunikationsnetz (30, 40); und
j) Anzeigen der im Schritt h) ermittelten virtuellen Rufnummer des anrufenden Fernsprechteilnehmers auf dem Endgerät (50) des gerufenen Fernsprechteilnehmers.

3. Telekommunikationssystem (10) mit
mindestens einem Telekommunikationsnetz (30, 40), einer Vielzahl von Endgeräten (50, 90), die jeweils so konfiguriert sind, dass sie eine bestimmte tatsächliche Rufnummer verarbeiten,
einer Dienstplattform (60, 70), die mit dem mindestens einen Telekommunikationsnetz (30, 40) über ein Verbindungssystem (32, 61) verbunden ist, wobei die Dienstplattform (60, 70, 72) so konfiguriert ist, dass sie für jeden Fernsprechteilnehmer einer Vielzahl von Fernsprechteilnehmern mindestens eine virtuelle Rufnummer und eine Information speichert, die die mindestens eine virtuelle Rufnummer mit einer tatsächlichen Rufnummer des jeweiligen Fernsprechteilnehmers verknüpft,
eine Datenbank (20), die so konfiguriert ist, dass sie eine Vielzahl von virtuellen Rufnummern, einen Portierungscode, der jeder virtuellen Rufnummer zugeordnet ist und die Diensteplattform (60, 70) identifiziert, eine Dienstnummer und eine Information, dass die Dienstnummer dem Portierungscode zugeordnet ist, speichert, wobei die Datenbank (20) ferner so konfiguriert ist, dass sie den Portierungscode dem mindestens einen Telekommunikationsnetz (30, 40) bereitstellt, wobei das mindestens eine Telekommunikationsnetz (30, 40) so konfiguriert ist, dass es Zugriff auf die Datenbank (20) erhält, wobei
das mindestens eine Telekommunikationsnetz (30, 40) so konfiguriert ist, dass es Signalisierungsinformationen, die die von dem Endgerät (90) des anrufenden Fernsprechteilnehmers bereitgestellte Dienstenummer enthalten, an die Datenbank (20) weiterleitet und Signalisierungsinformationen, die die Dienstenummer enthalten, über das Verbindungssystem (31, 61) unter Verwendung des Portierungscodes, der der Dienstenummer zugeordnet ist, an die Diensteplattform (60, 70) weiterleitet, wobei
die Diensteplattform (60, 70) so konfiguriert ist, dass sie eine Anforderungsnachricht an das Endgerät (90) des anrufenden Fernsprechteilnehmers sendet, die den anrufenden Fernsprechteilnehmer auffordert, eine tatsächliche Rufnummer eines gerufenen Fernsprechteilnehmers und eine Information über die virtuelle Rufnummer einzugeben, die zur Anzeige auf dem Endgerät (50) des angerufenen Fernsprechteilnehmers verwendet werden soll, wobei die virtuelle Rufnummer mit der tatsächlichen Rufnummer des anrufenden Fernsprechteilnehmers verknüpft ist, wobei
das Endgerät (90) des anrufenden Fernsprechteilnehmers so konfiguriert ist, dass es die Informationen über die virtuelle Rufnummer, die zur Anzeige auf dem Endgerät (50) des angerufenen Fernsprechteilnehmers zu verwenden ist, und die tatsächliche Rufnummer des gerufenen Fernsprechteilnehmers über das mindestens eine Telekommunikationsnetz (30, 40) an die Dienstplattform (60, 70) zu übermitteln, wobei die Dienstplattform (60, 70) so konfiguriert ist, dass sie in Reaktion auf die Informationen über die virtuelle Rufnummer, die zur Anzeige auf dem Endgerät (50) des angerufenen Fernsprechteilnehmers verwendet werden soll, die virtuelle Rufnummer, die zur Anzeige auf dem Endgerät (50) des angerufenen Fernsprechteilnehmers verwendet werden soll, ermittelt und die ermittelte virtuelle Rufnummer und die tatsächliche Rufnummer des angerufenen Fernsprechteilnehmers dem mindestens einen Telekommunikationsnetz (30, 40) bereitstellt, wobei das mindestens eine Telekommunikationsnetz (30, 40) so konfiguriert ist, dass es in Reaktion auf die tatsächliche Rufnummer des gerufenen Fernsprechteilnehmers die ermittelte virtuelle Rufnummer, die zur Anzeige auf dem Endgerät (50) des gerufenen Fernsprechteilnehmers zu verwenden ist, an das Endgerät (50) des gerufenen Fernsprechteilnehmers weiterleitet und einen abgehenden Anruf vom Endgerät (90) des anrufenden Fernsprechteilnehmers an das Endgerät (50) des gerufenen Fernsprechteilnehmers unter Verwendung der tatsächlichen Rufnummer des gerufenen Fernsprechteilnehmers herstellt.

4. Telekommunikationssystem nach Anspruch 3,
wobei die Dienstplattform (60) mindestens einen Server (70) mit einem Controller, mindestens einem Speicher und einer Konfigurationsschnittstelle (74) umfasst, die zur Kommunikation mit einem Konfigurationsgerät (80) eines Benutzers ausgebildet ist.

## Revendications

1. Procédé de traitement d'un appel sortant utilisant au moins un réseau de télécommunication (30, 40) en utilisant une plate-forme de service (60) interconnectée à l'au moins un réseau de télécommunication (30, 40), dans lequel un numéro d'appel réel et au moins un numéro d'appel virtuel sont attribués à chacun d'une pluralité d'abonnés téléphoniques, dans lequel, pour chaque abonné téléphonique de la pluralité d'abonnés téléphoniques, au moins un numéro d'appel virtuel et une information liant l'au moins un numéro virtuel au numéro d'appel réel de l'abonné téléphonique respectif sont stockés sur la plate-forme de service (60, 70, 72), dans lequel
un code de portage qui identifie la plate-forme de service (60, 70) est attribué à un numéro de service qui est attribué à la plate-forme de service (60, 70), dans lequel le code de portage et le numéro de service attribué au code de portage sont stockés dans une base de données (20) qui est connectée à l'au moins un réseau de télécommunication (30, 40) ; dans lequel le procédé comprend les étapes suivantes :
a) la saisie, sur le terminal (90) de l'abonné téléphonique appelant pour lequel un numéro d'appel virtuel et une information liant l'au moins un numéro virtuel au numéro d'appel réel dudit abonné téléphonique appelant sont stockés au niveau de la plate-forme de service (60, 70, 72), du numéro de service de la plate-forme de service (60, 70) ;
b) l'acheminement d'un message de signal comprenant le numéro de service et le numéro d'appel réel de l'abonné téléphonique appelant vers la base de données (20) et la détermination si le numéro de service saisi dans l'étape a) est attribué au code de portage,
c) dans l'affirmative, l'acheminement du message de signal de l'étape b) via l'au moins un réseau de télécommunication vers la plate-forme de service (60, 70) en utilisant le code de portage attribué au numéro de service ;
d) l'envoi, en réponse au numéro de service et au numéro d'appel réel de l'abonné téléphonique appelant compris dans le message de signal de l'étape c), d'un message de demande au terminal (90) de l'abonné téléphonique appelant invitant l'abonné téléphonique appelant à saisir le numéro d'appel réel de l'abonné téléphonique appelé ;
e) l'envoi, par le terminal (90) de l'abonné téléphonique appelant, d'un message de signal comprenant le numéro d'appel réel de l'abonné téléphonique appelé à la plate-forme de service (60, 70) ;
f) l'acheminement, en réponse au numéro d'appel réel de l'abonné téléphonique appelé, du numéro d'appel virtuel attribué à l'abonné téléphonique appelant vers le terminal (30) de l'abonné téléphonique appelé et l'établissement d'un appel sortant du terminal (90) de l'abonné téléphonique appelant au terminal (50) de l'abonné téléphonique appelé en utilisant le numéro d'appel réel de l'abonné téléphonique appelé sur l'au moins un réseau de télécommunication (30, 40) ; et
g) l'affichage du numéro d'appel virtuel de l'abonné téléphonique appelant sur le terminal (50) dudit abonné téléphonique appelé.

2. Procédé de traitement d'un appel sortant utilisant au moins un réseau de télécommunication (30, 40) et une plate-forme de service (60) interconnectée à l'au moins un réseau de télécommunication (30, 40), dans lequel un numéro d'appel réel et au moins un numéro d'appel virtuel sont attribués à chacun d'une pluralité d'abonnés téléphoniques, dans lequel, pour chaque abonné téléphonique de la pluralité d'abonnés téléphoniques, au moins un numéro d'appel virtuel et une information liant l'au moins un numéro virtuel au numéro d'appel réel de l'abonné téléphonique respectif sont stockés sur la plate-forme de service (60, 70, 72), dans lequel
un code de portage qui identifie la plate-forme de service (60, 70) est attribué à un numéro de service qui est attribué à la plate-forme de service (60, 70), dans lequel le code de portage et le numéro de service attribué au code de portage sont stockés dans une base de données (20) qui est connectée à l'au moins un réseau de télécommunication (30, 40) ;
a) la saisie, sur le terminal (90) de l'abonné téléphonique appelant pour lequel au moins deux numéros d'appel virtuels et une information liant les au moins deux numéros virtuels au numéro d'appel réel dudit abonné téléphonique appelant sont stockés au niveau de la plate-forme de service (60, 70, 72), du numéro de service de la plate-forme de service (60, 70) ;
b) l'acheminement d'un message de signal comprenant le numéro de service et le numéro d'appel réel de l'abonné téléphonique appelant vers la base de données (20) et la détermination si le numéro de service saisi dans l'étape a) est attribué au code de portage,
c) dans l'affirmative, l'acheminement du message de signal de l'étape b) via l'au moins un réseau de télécommunication vers la plate-forme de service (60, 70) en utilisant le code de portage attribué au numéro de service ;
d) l'envoi, en réponse au numéro de service et au numéro d'appel réel de l'abonné téléphonique appelant compris dans le message de signal de l'étape c), d'un message de demande au terminal (90) de l'abonné téléphonique appelant invitant l'abonné téléphonique appelant à saisir une information du numéro d'appel virtuel à utiliser pour l'affichage sur le terminal (50) de l'abonné téléphonique appelé, dans lequel le numéro d'appel virtuel est lié au numéro réel dudit abonné téléphonique appelant ;
e) la transmission, par le terminal (90) de l'abonné téléphonique appelant, d'un message de signal comprenant le numéro d'appel réel de l'abonné téléphonique appelant et l'information sur le numéro d'appel virtuel à utiliser pour l'affichage sur le terminal (50) de l'abonné téléphonique appelé à la plate-forme de service (60, 70) ;
f) l'envoi, en réponse au numéro d'appel virtuel compris dans le message de signal de l'étape e), d'un message de demande au terminal (90) de l'abonné téléphonique appelant invitant l'abonné téléphonique appelant à saisir le numéro d'appel réel de l'abonné téléphonique appelé ;
g) l'envoi, par le terminal (90) de l'abonné téléphonique appelant, d'un message de signal comprenant le numéro d'appel réel de l'abonné téléphonique appelé à la plate-forme de service (60, 70) ;
h) la détermination, au niveau de la plate-forme de service (60, 70), du numéro d'appel virtuel à utiliser pour l'affichage sur le terminal (50) de l'abonné téléphonique appelé en réponse au numéro de service et à l'information sur le numéro d'appel virtuel à utiliser ; et
i) l'acheminement, en réponse au numéro d'appel réel de l'abonné téléphonique appelé, du numéro d'appel virtuel déterminé dans l'étape h) vers le terminal (30) de l'abonné téléphonique appelé et l'établissement d'un appel sortant du terminal (90) de l'abonné téléphonique appelant au terminal (50) de l'abonné téléphonique appelé en utilisant le numéro d'appel réel de l'abonné téléphonique appelé sur l'au moins un réseau de télécommunication (30, 40) ; et
j) l'affichage du numéro d'appel virtuel de l'abonné téléphonique appelant déterminé dans l'étape h) sur le terminal (50) dudit abonné téléphonique appelé.

3. Système de télécommunication (10) comprenant
au moins un réseau de télécommunication (30, 40),
une pluralité de terminaux (50, 90), chacun configuré pour traiter un numéro d'appel réel distinct,
une plate-forme de service (60, 70) interconnectée à l'au moins un réseau de télécommunication (30, 40) via un système d'interconnexion (32, 61), dans lequel la plate-forme de service (60, 70, 72) est configurée pour stocker, pour chaque abonné téléphonique d'une pluralité d'abonnés téléphoniques, au moins un numéro d'appel virtuel et une information liant l'au moins un numéro d'appel virtuel à un numéro d'appel réel de l'abonné téléphonique respectif,
une base de données (20) configurée pour stocker une pluralité de numéros d'appel virtuels, un code de portage qui est attribué à chaque numéro virtuel et identifie la plate-forme de service (60, 70), un numéro de service et une information indiquant que le numéro de service est attribué au code de portage, dans lequel la base de données (20) est configurée en outre pour fournir le code de portage à l'au moins un réseau de télécommunication (30, 40), dans lequel
l'au moins un réseau de télécommunication (30, 40) est configuré pour obtenir l'accès à la base de données (20), dans lequel
l'au moins un réseau de télécommunication (30, 40) est configuré pour acheminer une information de signalisation comprenant le numéro de service fourni par le terminal (90) de l'abonné téléphonique appelant à la base de données (20) et pour acheminer une information de signalisation comprenant le numéro de service à la plate-forme de service (60, 70) via le système d'interconnexion (31, 61) en utilisant le code de portage qui est attribué au numéro de service, dans lequel
la plate-forme de service (60, 70) est configurée pour envoyer un message de demande au terminal (90) de l'abonné téléphonique appelant invitant l'abonné téléphonique appelant à saisir un numéro d'appel réel d'un abonné téléphonique appelé et une information sur le numéro d'appel virtuel à utiliser pour l'affichage sur le terminal (50) de l'abonné téléphonique appelé, dans lequel le numéro d'appel virtuel est lié au numéro réel de l'abonné téléphonique appelant, dans lequel le terminal (90) de l'abonné téléphonique appelant est configuré pour envoyer l'information sur le numéro d'appel virtuel à utiliser pour l'affichage sur le terminal (50) de l'abonné téléphonique appelé et le numéro d'appel réel de l'abonné téléphonique appelé via l'au moins un réseau de télécommunication (30, 40) à la plate-forme de service (60, 70), dans lequel
la plate-forme de service (60, 70) est configurée pour déterminer, en réponse à l'information sur le numéro d'appel virtuel à utiliser pour l'affichage sur le terminal (50) de l'abonné téléphonique appelé, le numéro d'appel virtuel à utiliser pour l'affichage sur le terminal (50) de l'abonné téléphonique appelé et pour fournir le numéro d'appel virtuel déterminé et le numéro d'appel réel de l'abonné téléphonique appelé à l'au moins un réseau de télécommunication (30, 40),
dans lequel l'au moins un réseau de télécommunication (30, 40) est configuré pour acheminer, en réponse au numéro d'appel réel de l'abonné téléphonique appelé, du numéro d'appel virtuel déterminé à utiliser pour l'affichage sur le terminal (50) de l'abonné téléphonique appelé vers le terminal (50) de l'abonné téléphonique appelé et pour établir un appel sortant du terminal (90) de l'abonné téléphonique appelant au terminal (50) de l'abonné téléphonique appelé en utilisant le numéro d'appel réel de l'abonné téléphonique appelé.

4. Système de télécommunication selon la revendication 3, dans lequel la plate-forme de service (60) comprend au moins un serveur (70) comprenant un dispositif de commande, au moins un dispositif de stockage et une interface de configuration (74) adaptée pour communiquer avec un dispositif de configuration (80) d'un utilisateur.
